(19) Europäisches Patentamt
European Patent Office
Office européen des brevets

(11) **EP 4 610 593 A1**

(12) **EUROPEAN PATENT APPLICATION**

(43) Date of publication:
**03.09.2025 Bulletin 2025/36**

(21) Application number: 24160316.6

(22) Date of filing: **28.02.2024**

(51) International Patent Classification (IPC):
**G01C 19/5677** (2012.01)     **G01C 19/5776** (2012.01)

(52) Cooperative Patent Classification (CPC):
**G01C 19/5677; G01C 19/5776**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ATLANTIC INERTIAL SYSTEMS LIMITED**
**Plymouth, Devon PL6 6DE (GB)**

(72) Inventors:
• **FELL, Christopher Paul**
  **Cheltenham (GB)**
• **KAZER, Andrew**
  **Taunton (GB)**

(74) Representative: **Dehns**
  **10 Old Bailey**
  **London EC4M 7NG (GB)**

(54) **CAPACITIVE GYROSCOPE**

(57)     A capacitive gyroscope comprising: a structure configured to vibrate; a primary drive transducer configured to oscillate the structure in a primary mode of motion; a primary pick off transducer configured to detect oscillation of the structure in the primary mode of motion; a secondary pick off transducer configured to detect oscillation of the structure in a secondary mode of motion; a secondary drive transducer configured to null oscillation of the structure in the secondary mode of motion; a divider configured to determine an angular rate of rotation of the capacitive gyroscope based on an output from the primary pick off transducer and an output indicative of a secondary drive signal for the secondary drive transducer; and a linearizer configured to linearize the output from the primary pick off transducer based on at least one higher order harmonic of the output from the primary pick off transducer.

Figure 1

# EP 4 610 593 A1

## Description

This disclosure relates to a capacitive gyroscope, an inertial measurement unit and a method.

BACKGROUND

Capacitive gyroscopes determine angular rate of rotation by driving a structure to vibrate at its resonant frequency and then nulling oscillations caused by the Coriolis effect using a combination of drive and pick off transducers. However, due to non-linearities in the pick off transducer signals, errors in the determined angular rate of rotation occur. It is therefore desirable to improve capacitive gyroscopes, and in particular, reduce errors in the determined angular rate of rotation.

SUMMARY

According to a first aspect, there is provided a capacitive gyroscope comprising: a structure configured to vibrate; a primary drive transducer configured to oscillate the structure in a primary mode of motion; a primary pick off transducer configured to detect oscillation of the structure in the primary mode of motion; a secondary pick off transducer configured to detect oscillation of the structure in a secondary mode of motion; a secondary drive transducer configured to null oscillation of the structure in the secondary mode of motion; a divider configured to determine an angular rate of rotation of the capacitive gyroscope based on an output from the primary pick off transducer and an output indicative of a secondary drive signal for the secondary drive transducer; and a linearizer configured to linearize the output from the primary pick off transducer based on at least one higher order harmonic of the output from the primary pick off transducer.
The output from the primary pick off transducer may comprise a linear part and a non-linear part.
The capacitive gyroscope may comprise a first demodulator configured to demodulate the output from the primary pick off transducer into a first harmonic.
The at least one higher order harmonic may be a harmonic of the output from the primary pick off transducer that is higher than the first harmonic.
The capacitive gyroscope may comprise a second demodulator configured to demodulate the output from the primary pick off transducer into a second harmonic or a third harmonic.
The linearizer may be configured to linearize the output from the primary pick off transducer based on the second harmonic or the third harmonic.
The linearizer may be configured to multiply the second harmonic or the third harmonic by a multiplier.
The divider may be configured to determine the angular rate of rotation of the capacitive gyroscope based on the first harmonic of the output from the primary pick off transducer.
The divider may be configured to correct the angular rate of rotation based on the second harmonic or the third harmonic when the angular rate of rotation of the capacitive gyroscope is above a threshold angular rate of rotation.
The capacitive gyroscope may comprise an variable rate range loop configured to control the amplitude of a primary drive signal for the primary drive transducer.
The variable rate range loop may be configured to adjust an amplitude of the primary drive signal when the angular rate of rotation is above the threshold angular rate of rotation.
The variable rate range loop may be configured to increase the amplitude of the primary drive signal when the angular rate of rotation of the capacitive gyroscope is above the threshold angular rate of rotation and decreases while remaining above the threshold angular rate of rotation.
The variable rate range loop may be configured to decrease the amplitude of the primary drive signal when the angular rate of rotation of the capacitive gyroscope is above the threshold angular rate of rotation and increases while remaining above the threshold angular rate of rotation.
The variable rate range loop may be configured to fix the amplitude of the primary drive signal when the angular rate of rotation is below the threshold angular rate of rotation.
According to a second aspect, there is provided an inertial measurement unit comprising a capacitive gyroscope as described above.
According to a third aspect, there is provided a method of operating a capacitive gyroscope comprising a structure configured to vibrate, a primary drive transducer configured to oscillate the structure in a primary mode of motion, a primary pick off transducer configured to detect oscillation of the structure in the primary mode of motion, a secondary pick off transducer configured to detect oscillation of the structure in a secondary mode of motion, and a secondary drive transducer configured to null oscillation of the structure in the secondary mode of motion, the method comprising: determining an angular rate of rotation of the capacitive gyroscope based on an output from the primary pick off transducer and an output indicative of a secondary drive signal for the secondary drive transducer; and linearizing the output from the primary pick off transducer based on at least one higher order harmonic of the output from the primary pick off transducer.

Embodiments will be further described and explained by way of example with reference to the accompanying drawings in which:

Figure 1 shows a schematic of a variable rate range capacitive gyroscope;

Figure 2a shows a primary mode of motion of a gyroscope, and Figure 2b shows a secondary mode of motion of a gyroscope;

Figure 3 shows a schematic of a capacitive pick off transducer;

Figures 4a-4c show how an amplitude of the harmonics of a time varying primary pick off transducer signal increase as the amplitude of oscillation in the primary mode of motion increases;

Figure 5 shows an amplitude of a first harmonic of a primary pick off transducer signal, an assumed amplitude of the first harmonic, and an error on the assumed amplitude;

Figure 6a shows how a scale factor error increases as an automatic gain control demand input decreases, Figure 6b shows how a maximum measurable angular rate of rotation increases as an automatic gain control demand input decreases, and Figure 6c shows how a scale factor error increases as a maximum measurable angular rate of rotation increases;

Figure 7 shows a scale factor error before and after a first correction;

Figure 8 shows a scale factor error before and after a second correction; and

Figure 9 shows a schematic of a variable rate range capacitive gyroscope.

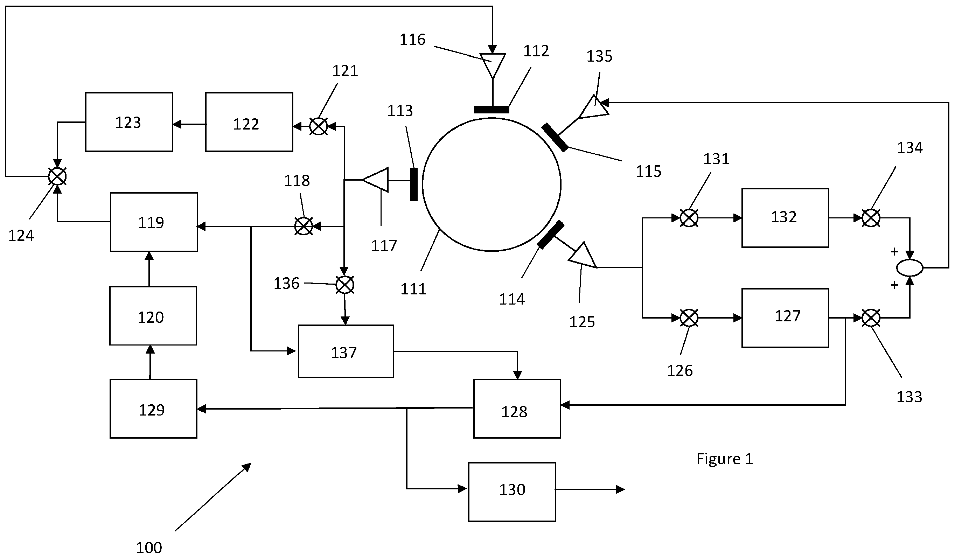

With reference to Figure 1, a capacitive gyroscope 100 comprises a structure 111 coupled to a primary drive transducer 112, and a primary pick off transducer 113. The structure 111 is a planar ring. However, in alternative embodiments, the structure 111 may comprise one or more of a ring, a beam, a tuning fork, a cylinder, a hemispherical shell, and a disk.

During operation, the primary drive transducer 112 receives a primary drive signal at the resonant frequency of the structure 111. This causes the primary drive transducer 112 to drive the structure 111 to oscillate. When the capacitive gyroscope 100 is stationary, the structure 111 oscillates in a primary mode of motion in which a first antinode is formed at the location of the primary drive transducer 112 (i.e. at 0°), a first node is formed at a location 45° from the primary drive transducer 112, a second antinode is formed at a location 90° from the primary drive transducer 112, and a second node is formed at a location 135° from the primary drive transducer 112.

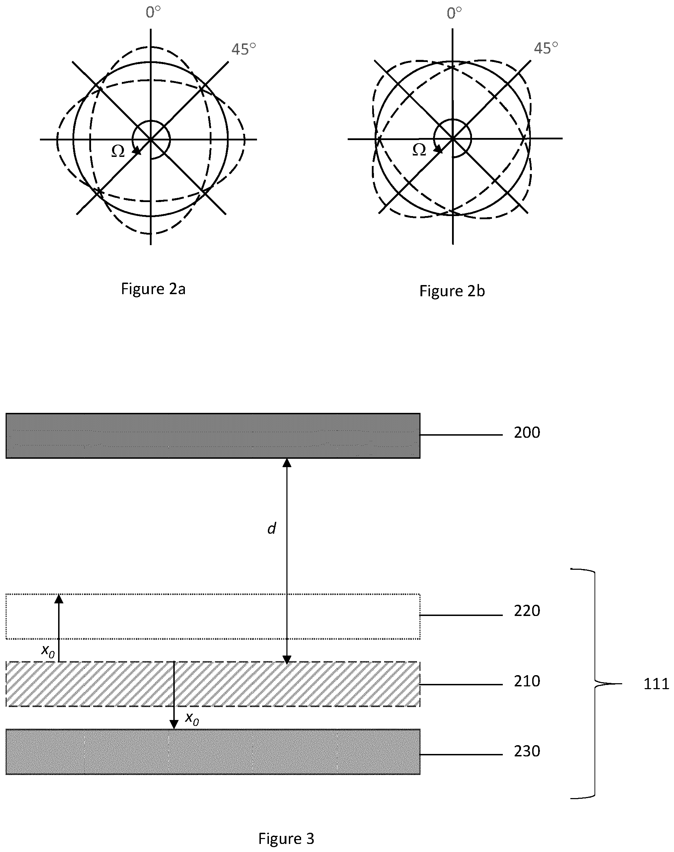

The primary mode of motion is illustrated in Figure 2a. Antinodes define locations on the structure 111 at which radial oscillation of the structure 111 is at a maximum while nodes define locations on the structure 111 that do not radially oscillate.

The primary pick off transducer 113 is located 270° from the primary drive transducer 112, i.e. where the second antinode is formed when the structure 111 is oscillating in the primary mode of motion. During operation, the primary pick off transducer 113 detects radial oscillation of the structure 111 and outputs a primary pick off transducer signal. This signal is amplified by a primary pick off amplifier 117 and then demodulated by a first demodulator 118 before being transmitted to an automatic gain control ("$A_{GC}$") loop 119. The $A_{GC}$ loop 119 also receives an $A_{GC}$ demand input 120 that controls the amplitude of the primary drive signal so that the primary pick off transducer signal is detected with a desired amplitude.

So as to maintain resonant oscillation of the structure 111, the primary pick off transducer signal is also demodulated by a second demodulator 121 (after being amplified by the primary pick off amplifier 117) and transmitted to a phase locked loop 122 which controls the phase of the amplified signal, followed by a voltage controlled oscillator 123 which controls the frequency of the primary drive signal to keep the primary drive signal operating at the resonant frequency of the structure 111. The adjusted signal is then re-modulated by modulator 124 and transmitted to a primary drive amplifier 116 where the signal is amplified before being provided to the primary drive transducer 112 as a primary drive signal.

A secondary pick off transducer 114 is located 135° from the primary drive transducer 112, i.e. at the second node when the structure 111 is oscillating in the primary mode of motion. When the capacitive gyroscope 100 is rotated about an axis perpendicular to the plane of the structure 111, Coriolis forces cause the structure 111 to oscillate in a secondary mode of motion. As illustrated in Figure 2b, at the locations where nodes are formed in the primary mode of motion, antinodes form in the secondary mode of motion, and at the locations where antinodes are formed in the primary mode of motion, nodes form in the secondary mode of motion.

If the capacitive gyroscope 100 is rotated about an axis during operation, the secondary pick off transducer 114 detects radial oscillation where there was no oscillation previously (since the secondary pick off transducer 114 is located at a node in the primary mode of motion, which becomes an antinode in the secondary mode of motion) and outputs a secondary pick off transducer signal. This signal is received by a secondary pick off amplifier 125 that amplifies the signal.

The amplified signal contains both a 'Real' component (i.e. a sine component) and a 'Quadrature' component (i.e. a cosine component). The 'Real' component provides a measure of the angular rate of rotation of the capacitive gyroscope 100, while the 'Quadrature' component is an error generated through imperfections in the capacitive gyroscope 100. As the 'Quadrature' component is orthogonal in phase to the 'Real' component, it does not contribute to the measured angular rate of rotation.

The amplified signal is demodulated by a third demodulator 126 and passed through a first filter 127 to extract the 'Real' component. The 'Real' component is transmitted to a divider 128, which also receives a primary pick off transducer signal that has been amplified by the primary pick off amplifier 117 and demodulated by the first demodulator 118. The divider 128 divides the 'Real' component by the amplified and demodulated primary pick off transducer signal and outputs the result to a variable rate range ("VRR") loop 129 and to a third filter 130. The VRR loop 129 is used to control the $A_{GC}$ demand input 120. The output of the divider 128 is provided to a third filter 130 which applies appropriate signal conditioning such as output scaling and bandwidth control, and the output from the third filter 130 provides a measurement of the angular rate of rotation of the capacitive gyroscope 100.

The amplified signal is also demodulated by a fourth demodulator 131 and passed through a second filter 132 to extract the 'Quadrature' component. The 'Real' component is then re-modulated by a second modulator 133 and the 'Quadrature' component is re-modulated by a third modulator 134 before being recombined and amplified by a secondary drive amplifier 135 to generate a secondary drive signal.

As illustrated in Figure 1, the capacitive gyroscope 100 further comprises a secondary drive transducer 115 located 45° from the primary drive transducer 112, i.e. at the first node when the structure 111 is oscillating in the primary mode of motion. The secondary drive signal is received by the secondary drive transducer 115, which causes the secondary drive transducer 115 to apply a force to the structure 111 that nulls the oscillations in the secondary mode of motion, i.e. so that the structure 111 only oscillates in the primary mode of motion.

If the amplitude of oscillation of the structure 111 in the secondary mode of motion increases to the point that the oscillations cannot be nulled by the maximum force that can be applied to the structure 111 by the secondary drive transducer 115, the capacitive gyroscope 100 becomes inoperable. The rate range (i.e. the maximum positive or negative angular rate of rotation that can be measured by the capacitive gyroscope 100) is therefore limited by the maximum force that can be applied to the structure 111 by the secondary drive transducer 115.

Adjusting the amplitude of oscillation of the structure 111 in the primary mode of motion, i.e. by changing the $A_{GC}$ demand input 120, allows the rate range to be adjusted. This is because the Coriolis forces on the capacitive gyroscope 100, when the capacitive gyroscope 100 is rotated about an axis, are proportional to both the angular rate of rotation of the capacitive gyroscope 100 and the amplitude of oscillation of the structure 111 in the primary mode of motion. As such, for a given angular rate of rotation, reducing the amplitude of oscillation in the primary mode of motion will cause a corresponding reduction in the magnitude of the Coriolis forces. In this way, the maximum force that can be applied to the structure 111 by the secondary drive transducer 115 can be made to correspond to a higher angular rate of rotation. For example, halving the amplitude of oscillation in the primary mode of motion effectively increases the usable rate range by a factor of two.

The resolution of the angular rate of rotation of the capacitive gyroscope 100 (i.e. the minimum angular rate of rotation that can be measured by the capacitive gyroscope 100) is typically limited by the magnitude of noise in the secondary pick off transducer signal. This can be improved by increasing the amplitude of oscillation of the structure 111 in the primary mode of motion. Increasing the rate range by reducing the amplitude of oscillation in the primary mode of motion therefore results in an undesirable degradation in the resolution of the angular rate of rotation of the capacitive gyroscope 100. However, the amplitude of oscillation in the primary mode of motion is only reduced at angular rates of rotation above the threshold angular rate of rotation. At these angular rates of rotation, other errors (e.g. scale factor errors) dominate over the noise errors. As such, while this degradation is unavoidable, it can be tolerated in practical systems over a wide range of $A_{GC}$ demand inputs 120.

Below a threshold angular rate of rotation, the $A_{GC}$ demand input 120 is fixed. When the angular rate of rotation increases above the threshold angular rate of rotation, the capacitive gyroscope 100 is operated in a VRR mode in which the $A_{GC}$ demand input 120 is varied based on the angular rate of rotation of the capacitive gyroscope 100. For example, when the angular rate of rotation of the capacitive gyroscope 100 is above the threshold angular rate of rotation and increases while still above the threshold angular rate of rotation, the $A_{GC}$ demand input 120 (under the control of the VRR loop 129) is reduced, which causes the amplitude of the primary drive signal to decrease and therefore the amplitude of oscillation of the structure 111 in the primary mode of motion to decrease. The threshold angular rate of rotation is the maximum angular rate of rotation that can be measured using the fixed $A_{GC}$ demand input 120.

As described above, the angular rate of rotation of the capacitive gyroscope 100 is derived from the output of the first filter 127, which corresponds to the baseband 'Real' component of the secondary drive signal required to null the 'Real' component of the oscillation of the structure 111 in the secondary mode of motion. The variation of the output of the first filter 127 as the angular rate of rotation of the capacitive gyroscope 100 varies can be considered to be an 'internal' scale factor which will typically be given in LSB per degree per second for a digital gyroscope or in Volts per degree per second for an analogue gyroscope.

The internal scale factor is dependent on the amplitude of oscillation of the structure 111 in the primary mode of motion, which is set by the $A_{GC}$ demand input 120. As such, when the capacitive gyroscope 100 is operated with a fixed

$A_{GC}$ demand input 120, i.e. when the angular rate of rotation of the capacitive gyroscope 100 is below the threshold angular rate of rotation, the internal scale factor is substantially constant over the operating rate range, i.e. fixed. However, when the capacitive gyroscope 100 is operated in the VRR mode, i.e. when the angular rate of rotation of the capacitive gyroscope 100 is above the threshold angular rate of rotation, the $A_{GC}$ demand input 120 is varied by the VRR loop 129 based on the measured angular rate of rotation, $\Omega$, of the capacitive gyroscope 100 in order to vary the amplitude of oscillation of the structure 111 in the primary mode of motion, such that:

$$A_{GC} \propto \frac{1}{\Omega}$$

In this case, the internal scale factor will vary in proportion with the amplitude of oscillation of the structure 111 in the primary mode of motion.

As such, provided that an accurate determination of the amplitude of oscillation of the structure 111 in the primary mode of motion is available then the internal scale factor (as measured at the output of the first filter 127) at any given angular rate of rotation (i.e. both above and below the threshold angular rate of rotation) may be calculated.

The angular rate of rotation may be derived from the output of the first filter 127 using the internal scale factor. The output of the first filter will not, however, vary linearly with the angular rate of rotation as the internal scale factor is not constant above the threshold angular rate of rotation. As such, the output of the first filter 127 is 'normalised' (i.e. divided by the amplified and demodulated primary pick off transducer signal) by the divider 128 so that the output of the divider 128 scales linearly with the angular rate of rotation of the capacitive gyroscope 100 for all angular rates of rotation. The output of the divider 128, which includes an output scale factor, is then used, after appropriate signal conditioning at the third filter 130, to provide a measurement of the angular rate of rotation of the capacitive gyroscope 100. For a perfect gyroscope (i.e. one free of errors), the output scale factor is constant over the entire operating rate range of the gyroscope.

The amplitude of oscillation of the structure 111 in the primary mode of motion cannot be measured directly but can be determined from the amplitude of the primary pick off transducer signal. Accurate operation of the capacitive gyroscope 100 in the VRR mode requires that the primary pick off transducer signal varies linearly with the amplitude of oscillation of the structure 111 in the primary mode of motion. However, the primary pick off transducer 113 is a capacitive transducer and therefore has some degree of non-linearity which will degrade accuracy of the output scale factor.

More specifically, the non-linear nature of the primary pick off transducer 113 results in a distortion of the sinusoidal shape of the primary pick off transducer signal which becomes more pronounced as the amplitude of oscillation of the structure 111 in the primary mode of motion increases. This distortion is due to the presence of higher order harmonic components in the primary pick off transducer signal and non-linearities in the first harmonic (1f) of the primary pick off transducer signal. The relative magnitude of the higher order harmonic components varies in a known manner as a function of the amplitude of oscillation of the structure 111 in the primary mode of motion and may be used to provide an estimate of the non-linearities which give rise to errors in the output scale factor that are dependent on the angular rate of rotation of the capacitive gyroscope 100. These errors may be corrected to provide a significant improvement in the accuracy of the determined angular rate of rotation of the capacitive gyroscope 100, as described below.

Figure 3 shows a schematic of a capacitive pick off transducer. The capacitive pick off transducer comprises a static sensing plate 200 adjacent to the structure 111. As illustrated, the structure 111 moves between a first position 210 (i.e. a rest position), a second position 230 (i.e. a maximum oscillation position) and a third position 220 (i.e. a minimum oscillation position). At the first position 210, the separation or gap between the static sensing plate 200 and the structure 111 is d. At the second position 230, the separation or gap between the static sensing plate 200 and the structure 111 is $d + x_0$. At the third position 220, the separation or gap between the static sensing plate 200 and the structure 111 is $d - x_0$.

The time varying capacitance $C(t)$ for the primary pick off transducer 113 is given by:

$$C(t) = \frac{\varepsilon A_S V_{HT}}{d(1 + \frac{x(t)}{d})}$$

$$x(t) = x_0 \sin(\omega t)$$

where $\varepsilon$ is the permittivity of the primary pick off transducer 113, $A_S$ is the area of the surface of the primary pick off transducer 113 adjacent to the structure 111, $V_{HT}$ is the DC voltage bias applied to the structure 111 to provide signal gain, $x(t)$ is the time dependent amplitude of oscillation of the structure 111 in the primary mode of motion, and $x_0$ is the amplitude of oscillation of the structure 111 at the resonant frequency of the structure 111.

The primary pickoff transducer signal $VPO(t)$, after being amplified by the primary pick off amplifier 117, is given

by:

$$VPO(t) = \frac{g_{ppo}}{d(1 + \frac{x(t)}{d})}$$

where $g_{ppo}$ is the overall gain of the primary pick off transducer 113, including both electronic gain and capacitance gain.

It will be appreciated that the primary pick off transducer signal has a non-linear dependence on the ratio $\frac{x(t)}{d}$. This dependence means that the primary pick off transducer signal is distorted from a pure sinusoidal waveform at the resonant frequency (1f) by higher order harmonics of the resonant frequency (2f, 3f, 4f and so on). The distortion level progressively increases as the ratio $\frac{x(t)}{d}$ increases.

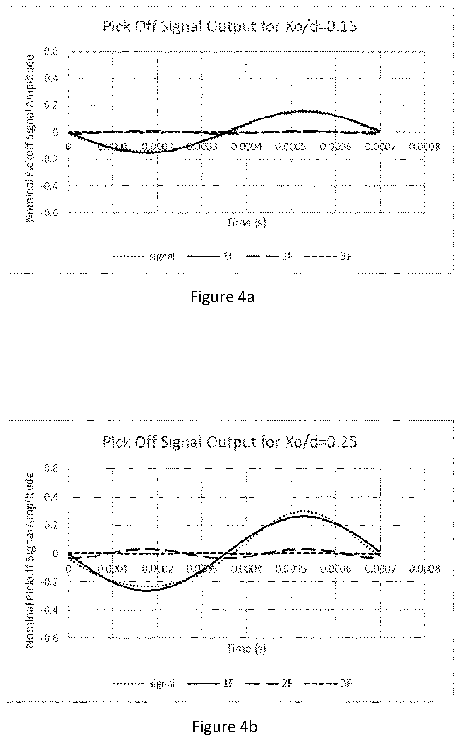

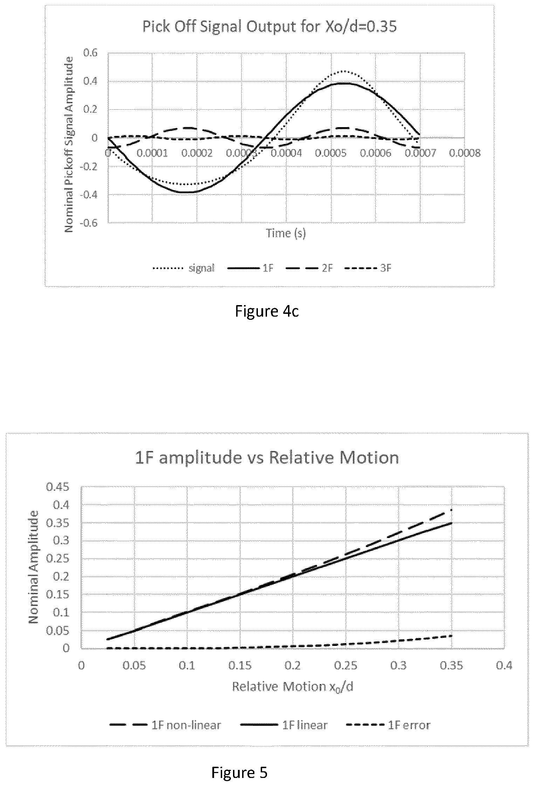

This is demonstrated in Figures 4a-4c which show the variation in amplitude of the time varying primary pick off transducer signal and the first, second and third harmonics of the primary pick off transducer signal for three different $\frac{x(t)}{d}$ ratios of 0.15, 0.25 and 0.35. As illustrated, as the $\frac{x(t)}{d}$ ratio increases, the contribution of the higher order harmonics to the primary pick off transducer signal becomes more significant.

In practice, the value of $\frac{x(t)}{d}$ typically falls in the range 0.1 to 0.2. However, to allow the non-linear effect of the higher order harmonics to be illustrated more clearly, some of the $\frac{x(t)}{d}$ ratios used herein are outside of this range.

The amplitude of oscillation of the structure 111 in the primary mode of motion at the resonant frequency of the structure 111 $x_0$ is constrained to be less than the separation or gap $d$ between the static sensing plate 200 and the structure 111 when the structure 111 is at the first position (i.e. rest position). As such, the primary pickoff transducer signal can be represented by a Taylor Expansion of the ratio $\frac{x(t)}{d}$ and the harmonics of the resonant frequency of the form:

$$VPO(t) = g_{ppo} \begin{bmatrix} \left(1 + \frac{1}{2}x_d^2 + \cdots\right) \\ -\left(x_d + \frac{3}{4}x_d^3 + \cdots\right)\sin\omega t \\ -\left(\frac{1}{2}x_d^2 + \cdots\right)\cos 2\omega t \\ +\left(\frac{1}{4}x_d^3 + \cdots\right)\sin 3\omega t + \cdots \end{bmatrix}$$

where $x_d = \frac{x(t)}{d}$. Higher order $x_d$ terms can be ignored as $x_d \ll 1$.

The first harmonic (1f) component is the dominant term in the time varying primary pick off transducer signal. As such, in-phase demodulation of the primary pick off transducer signal allows the non-linear effect of the higher order harmonics to be removed, providing a signal dependent on the amplitude of oscillation of the structure 111 in the primary mode of motion. That is, the first demodulator 118 demodulates the amplified primary pick off transducer signal to extract the first harmonic (1f) of the primary pick off transducer signal. The amplitude of this demodulated signal can then be used to determine the amplitude of oscillation of the structure 111 in the primary mode of motion. However, this determination assumes that the amplitude of the first harmonic (1f) in the primary pick off transducer signal scales linearly with $x_d$.

Figure 5 shows the actual amplitude of the first harmonic (1f) of the primary pick off transducer signal, together

6

with the assumed amplitude of the first harmonic (1f). As illustrated, the amplitude of the first harmonic (1f) is assumed to be a linear function of the ratio $x_d$, while the actual amplitude of the first harmonic (1f) is a non-linear function of the ratio $x_d$, resulting in an error that increases as a function of the ratio $x_d$.

The amplitude of the first harmonic (1f) $a_{1f}$ is given by:

$$a_{1f} = -g_{ppo}\left(x_d + \frac{3}{4}x_d^3 + \cdots\right) = a_{1f_L} + a_{1f\_NL}$$

comprising a linear term $a_{1f\_L}$:

$$a_{1f\_L} = -g_{ppo}x_d$$

and non-linear term $a_{1f\_NL}$:

$$a_{1f\_NL} = -g_{ppo}\frac{3}{4}x_d^3 + \cdots$$

The non-linear term is the error in the first harmonic (1f) of the primary pick off transducer signal when the first harmonic (1f) is assumed to be linear with $x_d$.

Below the threshold angular rate of rotation, the $A_{GC}$ demand input 120 is fixed at a maximum value, maximising $x_d$, and resulting in a maximum non-linear error. Above the threshold angular rate of rotation, the $A_{GC}$ demand input 120 is reduced as the angular rate of rotation increases, which causes the ratio $x_d$ to decrease, and the non-linear error to also decrease.

As such, the initial calibration of the capacitive gyroscope 100 is performed below the threshold angular rate of rotation when the amplitude of oscillation of the structure 111 in the primary mode of motion is maximised, i.e. when the structure 111 is oscillating at resonance. An output scale factor for use above and below the threshold angular rate of rotation is obtained in this calibration and the non-linear error is removed. However, the non-linear error that is removed is the maximum non-linear error. Since the non-linear error decreases above the threshold angular rate or rotation, the calibrated output scale factor becomes increasingly inaccurate as the angular rate of rotation of the capacitive gyroscope 100 increases above the threshold angular rate of rotation. In other words, the calibrated output scale factor overcompensates for the non-linear error above the threshold angular rate of rotation, resulting in a scale factor error.

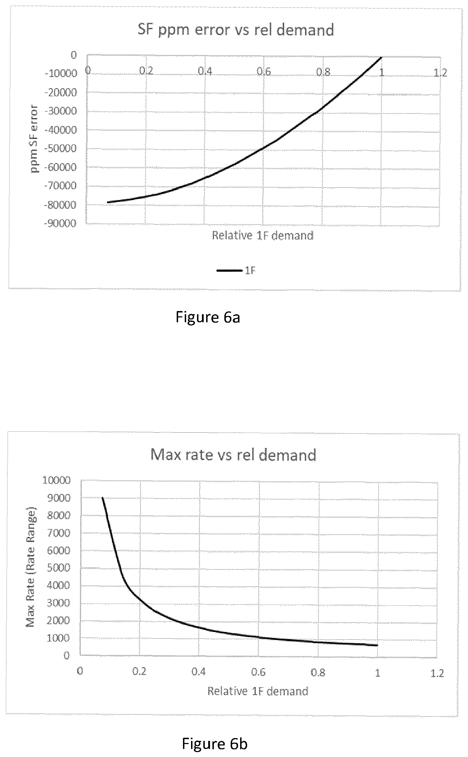

Figure 6a shows a typical output scale factor error arising from a decrease in the $A_{GC}$ demand input 120, for an initial value of $x_d = 0.25$ below the angular rate of rotation, if the non-linear error in the demodulated primary pick off transducer signal is assumed to be constant with $x_d$. In this case, the $A_{GC}$ demand input 120 below the threshold angular rate of rotation is fixed at 1. As the angular rate of rotation of the capacitive gyroscope 100 increases above the threshold angular rate of rotation, the $A_{GC}$ demand input 120 is reduced. However, this causes the output scale factor error to increase since the non-linear error is not constant above the threshold angular rate of rotation, but decreases. Specifically, the error in the output scale factor changes most rapidly for an $A_{GC}$ demand input 120 close to the fixed $A_{GC}$ demand input 120 where the non-linear error in the first harmonic (1f) of the primary pick off transducer signal decreases most quickly, and the error becomes approximately constant for a lower $A_{GC}$ demand input 120 as the non-linear error in the first harmonic (1f) of the primary pick off transducer signal becomes << 1. There is no scale factor error at the fixed $A_{GC}$ demand input 120 because this is when the non-linear error is at a maximum, i.e. the calibrated output scale factor correctly removes the error.

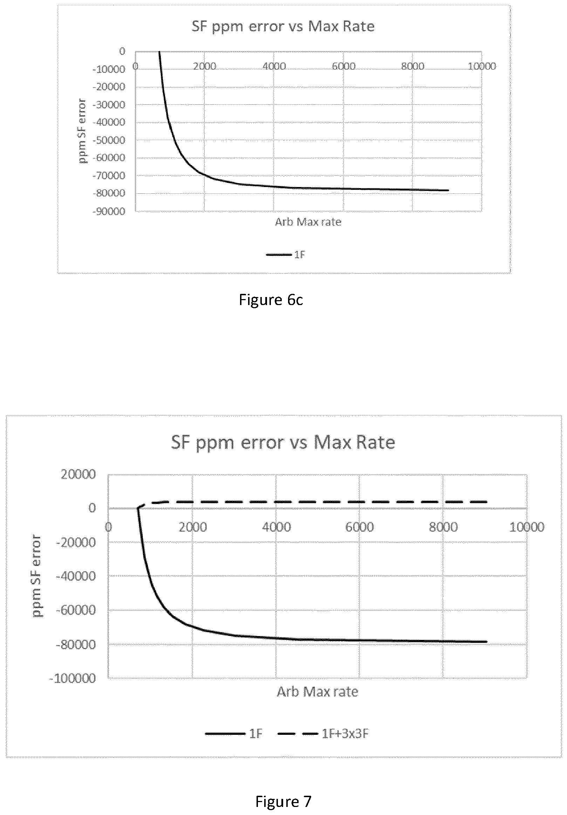

Figure 6b shows how the maximum rate range (i.e. the maximum angular rate of rotation that the capacitive gyroscope 100 can measure) increases as the $A_{GC}$ demand input 120 decreases for a threshold angular rate of rotation of 700deg/s. Figure 6c shows how the output scale factor error increases above a specific angular rate of rotation, i.e. the threshold angular rate of rotation. As illustrated in Figure 6c, the error in the output scale factor changes most rapidly for an angular rate of rotation close to the threshold angular rate of rotation where the non-linear error in the first harmonic (1f) of the primary pick off transducer signal decreases most quickly, and the error becomes approximately constant for a higher angular rate of rotation as the non-linear error in the first harmonic (1f) of the primary pick off transducer signal becomes << 1. There is no scale factor error at and below the threshold angular rate of rotation because this is when the non-linear error is at a maximum, i.e. the calibrated output scale factor correctly removes the error. Since the output scale factor is calibrated below the threshold angular rate of rotation using a fixed $A_{GC}$ demand input 120, the output scale factor is identical to the internal scale factor below the threshold angular rate of rotation and both scale factors are substantially constant, i.e. fixed. Above the threshold angular rate of rotation, the internal scale factor will vary approximately inversely with the $A_{GC}$ demand input 120, but the output scale factor remains constant. However, as described above, errors will arise in the calibrated output scale factor due to the non-linear behaviour of the first harmonic (1f) of the primary pick off transducer signal.

The output scale factor for a given $A_{GC}$ demand input 120 is dependent on the ratio $x_d$ so that the relationship for the output scale factor $SF_{act}(A)$ at an arbitrary $A_{GC}$ demand input 120 $A$ compared to the output scale factor at calibration $SF_{act}(A_{cal})$ is given by:

$$SF_{act}(A) = SF_{act}(A_{cal}) \frac{x_d}{x_{d\_cal}}$$

where $x_{d\_cal}$ is the ratio $\frac{x(t)}{d}$ corresponding to the $A_{GC}$ demand input 120 at calibration $A_{cal}$, and $x_d$ is the ratio $\frac{x(t)}{d}$ corresponding to an $A_{GC}$ demand input 120 at an arbitrary value $A$.

For a capacitive gyroscope 100, the amplitude of oscillation of the structure 111 in the primary mode of motion is non-linear with the $A_{GC}$ demand input 120 such that above the threshold angular rate of rotation:

$$\frac{x_d}{x_{d\_cal}} \neq \frac{A}{A_{cal}}$$

and:

$$SF_{act}(A) \neq SF_{act}(A_{cal}) \frac{A}{A_{cal}}$$

However, it has been recognised that the output scale factor can be corrected using the higher order harmonics of the primary pick off transducer signal.

The amplitude of the second harmonic (2f) $a_{2f}$ is given by:

$$a_{2f} = -g_{ppo} \left( \frac{1}{2} x_d^2 + \cdots \right)$$

and the amplitude of the third harmonic (3f) $a_{3f}$ is given by:

$$a_{3f} = g_{ppo} \left( \frac{1}{4} x_d^3 + \cdots \right)$$

By inspection of the harmonics of the non-linear primary pickoff transducer signal, it can be seen that there is an approximately linear relationship between the non-linear part of the first harmonic (1f) and the third harmonic (3f):

$$a_{1f} = -g_{ppo} \left( x_d + \frac{3}{4} x_d^3 + \cdots \right) = a_{1f_L} + a_{1f_{NL}} \approx -g_c x_d - 3a_{3f}$$

This can be rearranged to give:

$$x_d \approx -\frac{1}{g_{ppo}} \left( a_{1f} + 3a_{3f} \right)$$

Using this relationship, the output scale factor can be corrected to $SF_{cor}(A)$:

$$SF_{cor}(A) = SF_{act}(A_{cal}) \frac{a_{1f} + 3a_{3f}}{a_{1f\_cal} + 3a_{3f\_cal}} \approx SF_{act}(A)$$

This relationship substantially removes the error from the output scale factor when it is assumed that the non-linear error in the first harmonic (1f) of the primary pick off transducer signal is constant, and therefore significantly improves the accuracy of the output scale factor at angular rates of rotation above the threshold angular rate of rotation. This is demonstrated in Figure 7 which shows an approximately 20-fold reduction in the peak error at the higher angular rate of rotation, for an initial value of $x_d = 0.25$ below the threshold angular rate of rotation.

As illustrated in Figure 1, the capacitive gyroscope 100 comprises a fifth demodulator 136, which extracts the third harmonic (3f) from the amplified primary pick off transducer signal. This is transmitted to a linearizer 137, together with the demodulated signal from the first demodulator 118 (i.e. the first harmonic (1f) from the amplified primary pick off transducer signal). The linearizer 137 calculates a value representative of $x_d$ using the measured amplitudes of the first harmonic (1f) and the third harmonic (3f), where:

$$x_d \approx -\frac{1}{g_{ppo}}\left(a_{1f} + 3a_{3f}\right)$$

and linearizes the primary pick off transducer signal. This is then transmitted to the divider 128, which normalises the output scale factor using the linearized primary pick off transducer signal (thereby correcting the output scale factor) and calculates the angular rate of rotation, $\Omega$, of the capacitive gyroscope 100 using the following equation:

$$\Omega = k\frac{SD(Real) \times g_{PPO} \times g_{SD}}{VPO(t) \times \omega}$$

where *SD(Real)* is the output from the first filter 127 (which corresponds to the 'Real' component of the secondary drive signal), *VPO(t)* is the primary pick off transducer signal, amplified by the primary pick off amplifier 117, demodulated by the first demodulator 118 and linearized by the linearizer 137, $\omega$ is the resonant frequency of the structure 111 in the primary mode of motion in radians per second, $k$ is a constant which includes the modal mass and modal coupling coefficient, $g_{ppo}$ is the overall gain of the primary pick off transducer 113, including both electronic gain and capacitance gain, and $g_{SD}$ is the gain of the secondary drive transducer 115. As it will be appreciated, the angular rate of rotation is normalised in this calculation, i.e. the output from the first filter 127 is divided by the amplified, demodulated and linearized primary pick off transducer signal. The calculated angular rate of rotation is then provided to the third filter 130 which applies appropriate signal conditioning and uses the corrected output scale factor to generate a measurement of the angular rate of rotation of the capacitive gyroscope 100.

It will be appreciated that the linearizer 137 also linearizes the primary pick off transducer signal below the threshold angular rate of rotation. However, the $A_{GC}$ demand input 120 is fixed below the threshold angular rate of rotation so the linearized primary pick off transducer signal does not change. Since the output scale factor is calibrated below the threshold angular rate of rotation, when the linearized primary pick off transducer signal is constant, the output scale factor after normalization is identical to the calibrated output scale factor.

Below the threshold angular rate of rotation, the $A_{GC}$ demand input 120 is maintained at a constant value with the amplitude of the first harmonic (1f) and amplitude of the third harmonic (3f) fixed at $a_{1f\_cal}$ and $a_{3f\_cal}$, respectively. Above the threshold angular rate of rotation, the $A_{GC}$ demand input 120 is varied. This causes the $x_d$ value calculated by the linearizer 137 to vary, with the output being substantially proportional to the amplitude of oscillation of the structure 111 in the primary mode of motion.

In practice, the amplitude of the third harmonic (3f) of the primary pick off transducer signal will be considerably smaller than the amplitude of the first harmonic (1f) of the primary pick off transducer signal, as illustrated in Figures 4a-4c. This results in a lower signal to noise characteristic for the third harmonic (3f) compared to the first harmonic (1f), which is undesirable. As such, an alternative to using the third harmonic (3f) of the primary pick off transducer signal is to use the second harmonic (2f) of the primary pick off transducer signal. However, this requires a more complex calculation.

By similar inspection of the harmonics of the non-linear primary pick off transducer signal, the third harmonic (3f) may be calculated from the amplitudes of the first harmonic (1f) and the second harmonic (2f):

$$\frac{a_{2f}^2}{a_{1f}} \approx g_{ppo}\left[\frac{1}{4}x_d^3\right] \approx -a_{3f}$$

The corrected output scale factor is then given by:

$$SF_{cor}(A) = SF_{act}(A_{cal}) \frac{a_{1f} - 3\left(a_{2f}^2/a_{1f}\right)}{a_{1f\_cal} - 3\left(a_{2f\_cal}^2/a_{1f\_cal}\right)}$$

The residual output scale factor error is the the same as illustrated in Figure 7.

In this embodiment, the fifth demodulator 136 extracts the second harmonic (2f) of the amplified primary pick off transducer signal. This is transmitted to the linearizer 137, together with the demodulated signal from the first demodulator 118 (i.e. the first harmonic (1f) from the amplified primary pick off transducer signal). The linearizer 137 calculates a value representative of $x_d$ using the measured amplitudes of the first harmonic (1f) and the second harmonic (2f), where:

$$x_d \approx -\frac{1}{g_{ppo}}\left(a_{1f} - 3\left(\frac{a_{2f}^2}{a_{1f}}\right)\right)$$

and linearizes the primary pick off transducer signal. This is then transmitted to the divider 128, which normalises the output scale factor using the linearized primary pick off transducer signal (thereby correcting the output scale factor) and calculates the angular rate of rotation of the capacitive gyroscope 100 as described above. The rest of the process is the same and is therefore omitted here.

The residual output scale factor error illustrated in Figure 7 is for an initial value of $x_d$ = 0.25 below the threshold angular rate of rotation. The magnitude of this error will vary to some extent depending on the initial value of $x_d$ that is selected below the threshold angular rate of rotation and will generally increase as this value increases. An additional improvement in the output scale factor may be achieved by removing this residual error using a multiplier K for the correction, as follows:

$$SF_{est}(A) \approx SF_{act}(A_{cal}) \frac{a_{1f} + Ka_{3f}}{a_{1f\_cal} + Ka_{3f\_cal}}$$

The value of K is dependent on how non-linear the primary pick off transducer signal is at calibration, i.e. below the threshold angular rate of rotation. For example, $K \approx 2.867$ for $x_{d\_cal}$ = 0.35, and it has been found that the value of K tends to 3 as $x_{d\_cal}$ decreases and the behaviour of the primary pick off transducer signal becomes more linear.

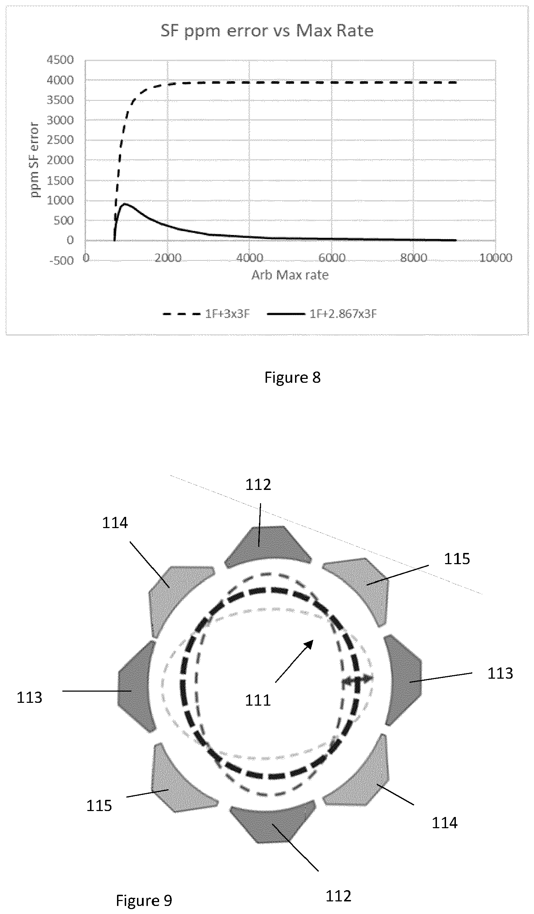

Figure 8 shows the reduction in the output scale factor error by applying the additional term K. As illustrated, the peak residual error is reduced from ~4000ppm to <1000ppm.

Below the threshold angular rate of rotation, when the output scale factor is calibrated, the value of $x_{d\_cal}$ may be derived directly from the measurements of the harmonics of the primary pick off transducer signal and therefore the optimum value for K may be determined. Alternatively, the amplitude of oscillation for the capacitive gyroscope 100 may be adjusted to give a constant value for $x_{d\_cal}$ and hence a constant value for K.

As illustrated in Figure 9, in some embodiments, the capacitive gyroscope 100 may comprise a pair of primary drive transducers 112, a pair of primary pick off transducers 113, a pair of secondary pick of transducers 114, and a pair of secondary drive transducers 115. Each pair may be arranged opposite each other around the capacitive gyroscope 100.

It will be appreciated that in a capacitive gyroscope 100, the primary drive transducer 112, primary pick off transducer 113, secondary pick off transducer 114, and secondary drive transducer 115 are capacitive transducers.

It should be noted that all instances of "*angular rate of rotation*" herein refer to the angular rate of rotation that is measured or calculated by the capacitive gyroscope 100.

Various aspects of the capacitive gyroscope disclosed in the various embodiments may be used alone, in combination, or in a variety of arrangements not specifically discussed in the embodiments described in the foregoing and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from the invention in its broader aspects. The scope of the following claims should not be limited by the embodiments set forth in the examples, but should be given the broadest reasonable interpretation consistent with the description as a whole.

## Claims

1.    A capacitive gyroscope comprising:

a structure configured to vibrate;

a primary drive transducer configured to oscillate the structure in a primary mode of motion;

a primary pick off transducer configured to detect oscillation of the structure in the primary mode of motion;

a secondary pick off transducer configured to detect oscillation of the structure in a secondary mode of motion;

a secondary drive transducer configured to dampen oscillation of the structure in the secondary mode of motion;

a divider configured to determine an angular rate of rotation of the capacitive gyroscope based on an output from the primary pick off transducer and an output indicative of a secondary drive signal for the secondary drive transducer; and

a linearizer configured to linearize the output from the primary pick off transducer based on at least one higher order harmonic of the output from the primary pick off transducer.

2. A capacitive gyroscope as claimed in claim 1, comprising a first demodulator configured to demodulate the output from the primary pick off transducer into a first harmonic.

3. A capacitive gyroscope as claimed in claim 2, where the at least one higher order harmonic is a harmonic of the output from the primary pick off transducer that is higher than the first harmonic.

4. A capacitive gyroscope as claimed in claim 2 or 3, comprising a second demodulator configured to demodulate the output from the primary pick off transducer into a second harmonic or a third harmonic.

5. A capacitive gyroscope as claimed in claim 4, wherein the linearizer is configured to linearize the output from the primary pick off transducer based on the second harmonic or the third harmonic.

6. A capacitive gyroscope as claimed in claim 5, wherein the linearizer is configured to multiply the second harmonic or the third harmonic by a multiplier.

7. A capacitive gyroscope as claimed in any preceding claim, wherein the divider is configured to determine the angular rate of rotation of the capacitive gyroscope based on the first harmonic of the output from the primary pick off transducer.

8. A capacitive gyroscope as claimed in claim 7, wherein the divider is configured to correct the angular rate of rotation based on the second harmonic or the third harmonic when the angular rate of rotation of the capacitive gyroscope is above a threshold angular rate of rotation.

9. A capacitive gyroscope as claimed in claim 8, comprising a variable rate range loop configured to control the amplitude of a primary drive signal for the primary drive transducer.

10. A capacitive gyroscope as claimed in claim 9, wherein the variable rate range loop is configured to adjust an amplitude of the primary drive signal when the angular rate of rotation of the capacitive gyroscope is above the threshold angular rate of rotation.

11. A capacitive gyroscope as claimed in claim 10, wherein the variable rate range loop is configured to increase the amplitude of the primary drive signal when the angular rate of rotation of the capacitive gyroscope is above the threshold angular rate of rotation and decreases while remaining above the threshold angular rate of rotation.

12. A capacitive gyroscope as claimed in claim 10 or 11, wherein the variable rate range loop is configured to decrease the amplitude of the primary drive signal when the angular rate of rotation of the capacitive gyroscope is above the threshold angular rate of rotation and increases while remaining above the threshold angular rate of rotation.

13. A capacitive gyroscope as claimed in any of claims 9-12, wherein the variable rate range loop is configured to fix the amplitude of the primary drive signal when the angular rate of rotation is below the threshold angular rate of rotation.

14. An inertial measurement unit comprising a capacitive gyroscope as claimed in any preceding claim.

15. A method of operating a capacitive gyroscope comprising a structure configured to vibrate, a primary drive transducer configured to oscillate the structure in a primary mode of motion, a primary pick off transducer configured to detect oscillation of the structure in the primary mode of motion, a secondary pick off transducer configured to detect oscillation of the structure in a secondary mode of motion, and a secondary drive transducer configured to null oscillation of the structure in the secondary mode of motion, the method comprising:

determining an angular rate of rotation of the capacitive gyroscope based on an output from the primary pick off transducer and an output indicative of a secondary drive signal for the secondary drive transducer; and linearizing the output from the primary pick off transducer based on at least one higher order harmonic of the output from the primary pick off transducer.

Figure 1

Figure 2a

Figure 2b

Figure 3

Figure 4a

Figure 4b

## Pick Off Signal Output for Xo/d=0.35

Figure 4c

## 1F amplitude vs Relative Motion

Figure 5

Figure 6a

Figure 6b

Figure 6c

Figure 7

Figure 8

Figure 9

Europäisches
Patentamt

European
Patent Office

Office européen
des brevets

# EUROPEAN SEARCH REPORT

**Application Number**

EP 24 16 0316

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/212424 A1 (MALVERN ALAN RICHARD [GB] ET AL) 26 August 2010 (2010-08-26) * abstract; figures 4, 5 * * paragraph [0003] - paragraph [0007] * * paragraph [0011] - paragraph [0016] * * paragraph [0028] - paragraph [0033] * ----- | 1-15 | INV. G01C19/5677 G01C19/5776 |
| A | WAGNER ANDREAS ET AL: "Determining the Nonlinear Motion of MEMS Gyroscopes Using the Harmonic Balancing Method", JOURNAL OF MICROELECTROMECHANICAL SYSTEMS, IEEE SERVICE CENTER, US, vol. 30, no. 4, 14 May 2021 (2021-05-14), pages 530-538, XP011866187, ISSN: 1057-7157, DOI: 10.1109/JMEMS.2021.3078320 [retrieved on 2021-07-13] * the whole document * ----- | 1-15 | |

**TECHNICAL FIELDS SEARCHED (IPC)**

G01C
B81B
G01P

The present search report has been drawn up for all claims

| Place of search | Date of completion of the search | Examiner |
|---|---|---|
| The Hague | 22 August 2024 | Hanigk, Sebastian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 16 0316

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2024

| Patent document cited in search report | Publication date | Patent family member(s) | | Publication date |
|---|---|---|---|---|
| US 2010212424 A1 | 26-08-2010 | AT | E520960 T1 | 15-09-2011 |
| | | EP | 2191232 A1 | 02-06-2010 |
| | | US | 2010212424 A1 | 26-08-2010 |
| | | WO | 2009037499 A1 | 26-03-2009 |

For more details about this annex : see Official Journal of the European Patent Office, No. 12/82